# EUROPEAN PATENT SPECIFICATION

(11) **EP 3 842 936 B1**
(45) Date of publication and mention of the grant of the patent: **12.02.2025**
(21) Application number: 19865424.6
(22) Date of filing: 24.09.2019
(51) Int. Cl.: G06F 9/44, G06F 9/445, G06F 9/451, G06F 12/12, G06F 8/61, G06F 9/54

(54) **MULTI-LANGUAGE SCHEDULING METHOD AND APPARATUS, AND EMBEDDED DEVICE**
VERFAHREN UND VORRICHTUNG ZUR MEHRSPRACHENPLANUNG UND EINGEBETTETE VORRICHTUNG
PROCÉDÉ ET APPAREIL DE PLANIFICATION MULTILINGUE, ET DISPOSITIF INCORPORÉ

(30) Priority: 30.09.2018 CN 201811160031
(43) Date of publication of application: 30.06.2021
(73) Proprietor: Hangzhou Hikvision Digital Technology Co., Ltd., Hangzhou, Zhejiang 310051 (CN)
(72) Inventor: TANG, Zhuzhen, Hangzhou, Zhejiang 310051 (CN)
(74) Representative: Goddar, Heinz J.
(86) International application number: PCT/CN2019/107548
(87) International publication number: WO 2020/063591

(56) References cited:
- CN-A- 101 093 443
- CN-A- 101 473 302
- CN-A- 104 375 896
- CN-A- 105 094 905
- US-A1- 2005 239 494
- US-A1- 2013 174 136
- US-B2- 7 716 641

## Description

### TECHNICAL FIELD

The present disclosure relates to the field of computer technology, and in particular to a multi-language scheduling method, a multi-language scheduling apparatus, and an embedded device.

### BACKGROUND

At present, embedded devices are basically provided with Web management pages. Generally, the Web management page is required to support multiple languages, and the multiple languages supported by the Web management page are all packed into a Web pack. When the embedded device is started, language packs corresponding to all the supported languages will be loaded into a memory of the device. When a terminal requests use of a language to display the Web management page of the device, the device returns a language pack of the language from its memory to the terminal, and then, the terminal displays the Web management page of the device based on the language pack. When the memory of the embedded device is small, a smaller number of language packs are stored in the memory. In this case, the Web management page of the device can support a smaller number of languages.

US 2005/239494 A1 discloses an approach for managing memory space in a mobile device. A plurality of data storage locations may be included. A plurality of software applications may be included, with each software application being operable to store data to a different data storage location. A data store management system may be operable to access and delete data stored in the plurality of data storage locations. If insufficient memory space is available in one of the data storage locations, then the data store management system may access the one data storage location and at least one other data storage location and delete data from at least one of the accessed data storage locations.

US 2013/174136 A1 discloses an approach in which a computer system receives a request to utilize a locale package for which to display information on a display. The computer system determines that the locale package is not installed on the computer system's operating system and, as such, sends a request to a locale service for a locale source file. The computer system receives the locale source file from the locale service and utilizes the received locale source file to generate the locale package. In turn, the computer system installs the generated locale package on the operating system.

### SUMMARY

The invention is defined by a multi-language scheduling method, a multi-language scheduling apparatus and an embedded device, according to the independent claims. Preferred embodiments are defined in the dependent claims.

In view of this, the present disclosure provides a multi-language scheduling method, a multi-language scheduling apparatus, and an embedded device.

In a first aspect, an example of the present disclosure provides a multi-language scheduling method. The method is applied to an embedded device. The method includes:
receiving a language scheduling request from a terminal, where the language scheduling request includes a language pack identifier;
when it is determined that there is not a language pack corresponding to the language pack identifier in a memory of the device, loading the language pack corresponding to the
when it is determined that there is the language pack corresponding to the language pack identifier in the memory of the device, obtaining the language pack corresponding to the language pack identifier from the memory of the device and returning the language pack to the terminal.

According to the invention, when it is determined that there is not the language pack corresponding to the language pack identifier in the memory of the device, loading the language pack corresponding to the language pack identifier from the external storage medium into the memory of the device includes:
determining whether a number of language packs in the memory is greater than or equal to a set value; and
in response to determining the number of language packs in the memory is greater than or equal to the set value, deleting at least one language pack in the memory according to a preset rule, and then loading the language pack corresponding to the language pack identifier from the external storage medium into the memory of the device.

According to the invention, after the language pack corresponding to the language pack identifier is obtained from the memory of the device, the method further includes:
increasing a number of times that the language pack is requested by 1.

According to the invention, deleting at least one language pack in the memory according to the preset rule includes:
deleting a language pack that is requested a minimum number of times in the memory.

In a possible implementation, deleting the language pack requested the minimum number of times in the memory includes:
deleting a language pack that is loaded into the memory earliest and requested the minimum number of times in the memory in response to that a number of language packs requested the minimum number of times is greater than 1.

In a second aspect, an example of the present disclosure further provides a multi-language scheduling apparatus. The apparatus includes modules for performing the multi-language scheduling method in the first aspect or in any possible implementation of the first aspect.

In a third aspect, an example of the present disclosure further provides an embedded device. The embedded device includes a memory, an external storage medium, a processor and a computer program that is stored on the external storage medium and operable on the processor, where,
the memory is configured to store one or more language packs loaded into the memory;
the external storage medium is configured to store language packs corresponding to languages supported by a Web management page of the device; and
the processor is configured to, when executing the program, perform steps of the multi-language scheduling method in the first aspect or in any possible implementation of the first aspect.

### BRIEF DESCRIPTION OF THE DRAWINGS

FIG 1 is a flowchart of a multi-language scheduling method according to an example of the present disclosure.
FIG 2 is an overall flowchart of multi-language scheduling according to an example of the present disclosure.
FIG 3 is a schematic diagram of a first structure of a multi-language scheduling apparatus according to an example of the present disclosure.
FIG 4 is a schematic diagram of a second structure of a multi-language scheduling apparatus according to an example of the present disclosure.
FIG 5 is a schematic diagram of a third structure of a multi-language scheduling apparatus according to an example of the present disclosure.
FIG 6 is a structural schematic diagram of an embedded device according to an example of the present disclosure.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The implementations described in the following examples do not represent all implementations consistent with the present disclosure. Rather, they are merely examples of apparatuses and methods consistent with some aspects of the present disclosure as detailed in the appended claims.

The terms used in the present disclosure are for the purpose of describing a particular example only, and are not intended to be limiting of the present disclosure. The singular forms such as "a", "said", and "the" used in the present disclosure and the appended claims are also intended to include plural forms, unless the context clearly indicates otherwise. It is also to be understood that the term "and/or" as used herein refers to any or all possible combinations that include one or more associated listed items.

It is to be understood that although different information may be described using the terms such as first, second and third in the present disclosure, the information should not be limited to these terms. These terms are used only to distinguish the same type of information from each other. For example, the first information may also be referred to as the second information without departing from the scope of the present disclosure, and similarly, the second information may also be referred to as the first information. Depending on the context, the word "if" as used herein may be interpreted as "when" or "as" or "determining in response to".

Generally, an embedded device mainly includes an embedded processor, relevant supporting hardware and an embedded software system, which is a "device" capable of working independently and integrating software and hardware. The embedded processor mainly includes a single chip microcomputer or a micro controller unit (MCU). The relevant supporting hardware includes a display card, a storage medium (such as a flash memory (Flash), a read-only memory (ROM) and a random access memory (RAM)), a communication device, a reading device of an integrated circuit card (IC card) or a credit card, and the like. The embedded software system includes underlying software, an operating system, a graphical interface, a communication protocol, a database system, a standardized browser and application software relating to hardware, and the like. The embedded device usually does not have a large-capacity external storage medium like a hard disk, and mostly uses a flash memory as the external storage medium.

At present, the embedded devices are basically provided with Web management pages for device login management. The Web management page is usually required to support multiple languages. The Web management page of the embedded device is usually opened by inputting a web address of the device in a browser of a terminal, and language packs corresponding to all supported languages will be loaded into a memory of the embedded device. When a user wants to use a Web management page of a particular language version, the terminal obtains a language pack of the language from the memory of the device, and then displays the Web management page of the device in the browser based on the language pack. When the memory of the embedded device is small, a smaller number of language packs are stored in the memory. In this case, the Web management page of the device can support a smaller number of languages.

In view of this, a multi-language scheduling method, a multi-language scheduling apparatus, and an embedded device are provided in the present disclosure.

Technical solutions of the examples of the present disclosure will be described clearly and fully below in combination with the drawings in the examples of the present disclosure.

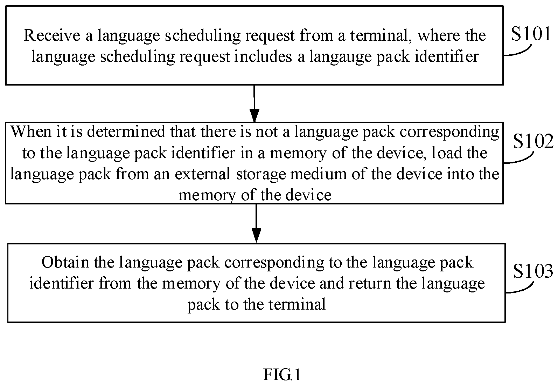

As shown in FIG 1, an example of the present disclosure provides a multi-language scheduling method. The method is applied to an embedded device. The method includes the following steps.

S101, a language scheduling request is received from a terminal, where the language scheduling request includes a language pack identifier.

The terminal includes a mobile phone, a personal computer (PC), a tablet computer, and the like.

The language pack identifier is an identifier for identifying a language type corresponding to a language pack. In an example, the language pack identifier may be a field that indicates a language type in a language pack name. For example, a Chinese language pack is zh.json, and its language pack identifier is zh; an English language pack is en.json, and its language pack identifier is en.

Optionally, the above language scheduling request may further include a language pack name, an Internet protocol (IP) address of device, and a storage path of language pack.

S102, when it is determined that there is not a language pack corresponding to the language pack identifier in a memory of the device, the language pack is loaded from an external storage medium of the device into the memory of the device.

The memory, also referred to as an internal memory, is volatile and data stored therein is lost upon power down. While the external storage medium is a non-volatile and data stored therein is not lost upon power down. Therefore, the external storage medium is used to store data. Generally, the memory has a faster storage speed and faster exchange speed than the external storage medium.

A central processing unit (CPU) can only directly access memory and cannot directly read data from or write data into the external storage medium. Data in the external storage medium is extracted through the memory. After the device is started, data to be processed and/or a program to be run, or the like is loaded from the external storage medium into the memory and thus can be directly accessed by the CPU. After being processed by the CPU, the processed data may be transferred to the external storage medium via the memory. After the device is powered off, the data in the memory will be lost.

In an example, the external storage medium is configured to store the language packs corresponding to the languages supported by the Web management page of the device, and the memory is configured to store one or more language packs loaded into the memory. Generally, when the embedded device is started, a Web pack of multiple languages in the external storage medium is decomposed into a plurality of language packs, and then, one or more language packs may be loaded into the memory according to requirements or needs.

The external storage medium may be, for example, a flash memory. The embedded device usually does not have a large-capacity external storage medium like a hard disk, and mostly uses a flash memory as the external storage medium. The memory of the device is usually smaller than the external storage medium, and is often insufficient due to application of algorithms, and the like.

S103, the language pack corresponding to the language pack identifier is obtained from the memory of the device and returned to the terminal. In this way, the terminal may display the Web management page of the embedded device in the language based on the returned language pack.

It is to be noted that all the devices mentioned in the examples of the present disclosure refer to embedded device unless otherwise specified.

In a possible implementation, the method may further include: when it is determined that there is a language pack corresponding to the language pack identifier in the memory of the device, obtaining the language pack corresponding to the language pack identifier from the memory of the device and returning the language pack to the terminal.

In a possible implementation, when the device is started, the method may further include: loading a default language pack (e.g., an English language pack) from the external storage medium of the device into the memory of the device.

In a possible implementation, the default language pack is set based on an official language of a country whose geographical position corresponds to an IP address of the device.

In a possible implementation, the default language pack is a language pack requested the maximum number of times during the last running process of the device.

According to the invention, after it is determined that there is not a language pack corresponding to the language pack identifier in the memory of the device, the method may further include: determining whether the number of language packs in the memory is greater than or equal to a set value M (e.g., 3); and in response to the number of language packs in the memory is greater than or equal to the set value M, deleting at least one language pack in the memory according to a preset rule, and then performing the above step of loading the language pack from the external storage medium of the device into the memory of the device.

It is to be noted that the above set value M may be the largest number of language packs allowable to be stored in the memory.

According to the invention, after the language pack corresponding to the language pack identifier is obtained from the memory of the device, the method may further include: increasing the number of times that the language pack is requested by 1. In this case, deleting at least one language pack in the memory according to the preset rule as described above may include: deleting a language pack requested the minimum number of times in the memory.

According to the invention, the number of language packs requested the minimum number of times is greater than 1. In this case, deleting the language pack requested the minimum number of times in the memory as described above may include: deleting a language pack that is loaded into the memory earliest and requested the minimum number of times in the memory.

For example, the set value M is 3, and the memory stores an English language pack (e.g., en.json), a German language pack (e.g., de.json) and a French language pack (e.g., fr.json). As shown in Table 1, the English language pack is requested twice and is the first to be loaded into the memory, the German language pack is requested three times and is the second to be loaded into the memory, and the French language pack is requested twice and is the third to be loaded into the memory. The language packs requested the minimum number of times in the memory are the English language pack and the French language pack, whereas the English language pack is loaded into the memory earlier than the French language pack. Therefore, the English language pack will be firstly deleted to release a part of the memory when there is no requested language pack in the memory.

**Table 1**

| Language type | en | de | fr |
|---|---|---|---|
| Time sequence of being loaded into the memory | 1 | 2 | 3 |
| number of times requested | 2 | 3 | 2 |

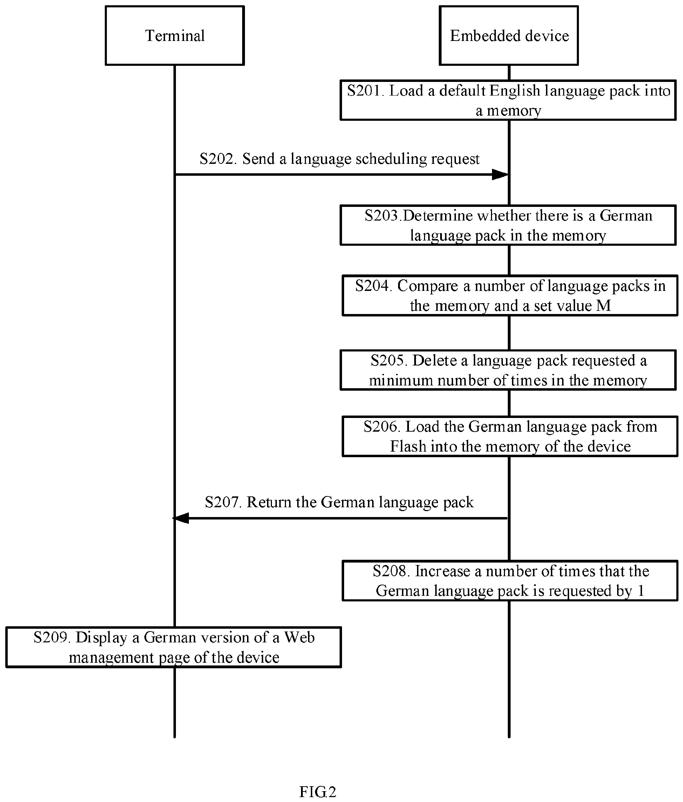

An overall flow of multi-language scheduling according to an example of the present disclosure is described below with the German language pack being requested as an example in combination with FIG 2.

S201, when an embedded device (hereinafter referred to as device) is started, a Web pack of multiple languages in Flash is decomposed into a plurality of language packs, and a default language pack (e.g., en.json) is loaded into a memory of the device from the Flash.

S202, a terminal sends a language scheduling request to the device.

The language scheduling request includes a German language pack identifier (de).

S203, the device determines whether there is a German language pack in the memory; in response to there is the German language pack in the memory (that is, the German language pack has already been requested before), step S207 is performed; in response to there is no German language pack in the memory (that is, the German language pack has not been requested before), step S204 is performed.

S204, whether the number of language packs in the memory is greater than or equal to the set value M (e.g., 3) is determined; in response to the number of language packs in the memory is greater than or equal to the set value M, steps S205, S206 and S207 are performed; in response to the number of language packs in the memory is not greater than or equal to the set value M, steps S206 and S207 are performed.

S205, a language pack that is loaded into the memory earliest and requested the minimum number of times in the memory is deleted.

S206, the German language pack is loaded from the Flash into the memory of the device.

S207, the German language pack is obtained from the memory of the device and returned to the terminal.

S208, the number of times that the German language pack is requested is increased by 1.

S209, the terminal displays a German version of the Web management page of the device in a browser based on the German language pack.

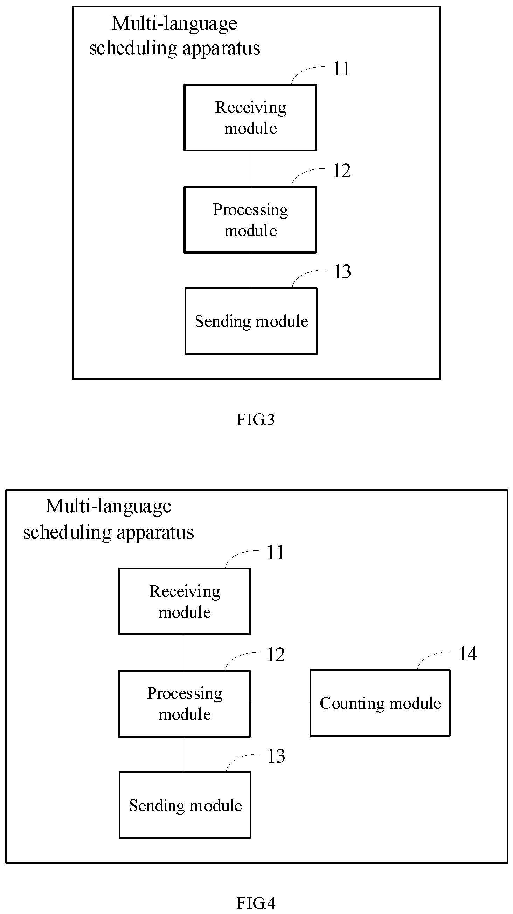

As shown in FIG 3, based on the same concept, an example of the present disclosure provides a multi-language scheduling apparatus. The apparatus includes a receiving module 11, a processing module 12 and a sending module 13.

The receiving module 11 is configured to receive a language scheduling request from a terminal, where the language scheduling request includes a language pack identifier. The processing module 12 is configured to load a language pack corresponding to the language pack identifier from an external storage medium into a memory of the device when it is determined that there is not the language pack corresponding to the language pack identifier in the memory of the device. The sending module 13 is configured to obtain the language pack corresponding to the language pack identifier from the memory of the device and return the language pack to the terminal.

In a possible implementation, the processing module 12 may be further configured to obtain the language pack corresponding to the language pack identifier from the memory of the device and return the language pack to the terminal when it is determined that there is the language pack corresponding to the language pack identifier in the memory of the device.

According to the invention, after it is determined that there is not the language pack corresponding to the language pack identifier in the memory of the device, the processing module 12 may be further configured to: determine whether the number of language packs in the memory is greater than or equal to a set value; in response to the number of language packs in the memory is greater than or equal to the set value, delete at least one language pack in the memory according to a preset rule, and then perform the step of loading the language pack from the external storage medium of the device into the memory of the device.

According to the invention, as shown in FIG 4, the above apparatus may further include a counting module 14. The counting module 14 is configured to increase the number of times that the language pack is requested by 1 after the language pack corresponding to the language pack identifier is returned to the terminal. The processing module 12 may be configured to delete a language pack requested the minimum number of times in the memory.

According to the invention, the number of language packs requested the minimum number of times is greater than 1. The processing module 12 may be configured to delete a language pack that is loaded into the memory earliest and requested the minimum number of times in the memory.

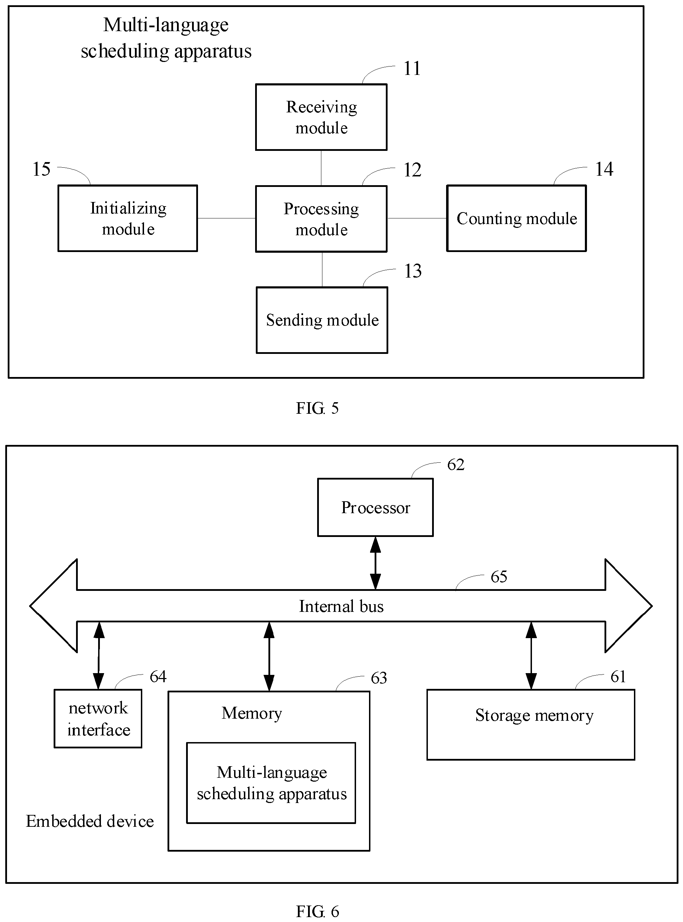

In a possible implementation, as shown in FIG 5, the above apparatus may further include an initializing module 15. The initializing module 15 is configured to load a default language pack from the external storage medium of the device into the memory of the device when the device is started.

In a possible implementation, the default language pack is set based on an official language of a country whose geographical position corresponds to an IP address of the device.

In a possible implementation, the default language pack is a language pack requested the maximum number of times during the last running process of the device.

Details of the implementation process of functions and effects of different units in the above apparatus may be seen from the implementation process of corresponding steps in the above method, which will not be redundantly described herein.

Since the apparatus examples substantially correspond to the method examples, a reference may be made to part of the descriptions of the method examples for the related part. The apparatus examples described above are merely illustrative, where the units described as separate members may be or not be physically separated, and the members displayed as units may be or not be physical units, that is, the members displayed as units may be located in one place, or may be distributed to a plurality of network units. Part or all of the modules may be selected according to actual requirements to achieve the objectives of the solutions in the present disclosure. Those of ordinary skill in the art may understand and carry out them without creative work.

Based on the same concept, as shown in FIG 6, an example of the present disclosure further provides an embedded device. The embedded device includes an external storage medium 61, a processor 62, a computer program that is stored on the external storage medium 61 and operable on the processor 62, and a memory 63. The external storage medium 61 is a non-volatile memory.

The external storage medium 61 is configured to store language packs corresponding to languages supported by a Web management page of the device. The memory 63 is configured to store one or more language packs loaded into the memory. The processor 62 is configured to, when executing the program, perform the steps of the multi-language scheduling method in any of the above possible implementations.

As shown in FIG 6, the embedded device generally may further include a network interface 64 and an internal bus 65. Other hardware may be further included in addition to these components, which will not be redundantly described herein.

It is to be noted that the above multi-language scheduling apparatus may be implemented by software. The apparatus, as a logical apparatus, is formed by reading computer program instructions stored in the non-volatile memory into the memory 63 for running by the processor 62 of the embedded device where the apparatus is located.

Examples of the subject and functional operations described in the present disclosure may be achieved in the following: a digital electronic circuit, a tangible computer software or firmware, a computer hardware including a structure disclosed in the present disclosure or a structural equivalent thereof, or a combination of one or more of the above. The examples of the subject described in the present disclosure may be implemented as one or more computer programs, that is, one or more modules in computer program instructions encoded on a tangible non-transitory program carrier for being executed by or controlling a data processing apparatus. Alternatively or additionally, the program instructions may be encoded on an artificially-generated transmission signal, such as a machine-generated electrical, optical or electromagnetic signal. The signal is generated to encode and transmit information to an appropriate receiver so that the signal is executed by the data processing apparatus. The computer storage medium may be a machine-readable storage device, a machine-readable storage substrate, a random or serial access memory device, or a combination of one or more of the above.

The processing and logic flows described in the present disclosure may be executed by one or more programmable computers executing one or more computer programs to perform operation based on input data and generate outputs to perform corresponding functions. The processing and logic flows may be further executed by a dedicated logic circuit, such as a field programmable gate array (FPGA) or an application specific integrated circuit (ASIC), and the apparatus may be further implemented as the dedicated logic circuit.

The computer suitable for executing the computer programs includes, for example, a general-purpose and/or special-purpose microprocessor, or any other type of central processing unit. Generally, the central processing unit receives instructions and data from a read-only memory and/or a random access memory. Basic components of the computer include a central processing unit for implementing or executing instructions and one or more storage devices for storing instructions and data. Generally, the computer further includes one or more mass storage devices for storing data, such as magnetic disks, magneto-optical disks or optical disks, or the computer is operably coupled to this mass storage device to receive data therefrom or transmit data thereto, or perform both. However, the computer does not necessarily have such a device. In addition, the computer may be embedded into another device, such as a mobile phone, a personal digital assistant (PDA), a mobile audio or video player, a game console, a global positioning system (GPS) receiver, or a portable storage device, e.g., a universal serial bus (USB) flash drive and so on.

A computer-readable medium suitable for storing computer program instructions and data includes all forms of non-volatile memories, media, and storage devices, such as semiconductor storage devices (for example, Erasable Programmable Read-Only Memories (EPROM), Electrically Erasable Programmable Read-Only Memories (EEPROM), and flash memory devices), magnetic disks (for example, internal hard disks or removable disks), magneto-optical disks, and CD-ROM and DVD-ROM disks. The processor and the memory may be supplemented by or incorporated into the dedicated logic circuit.

## Claims

1. A multi-language scheduling method, the method being applied to an embedded device, and comprising:
receiving (S101) a language scheduling request from a terminal, wherein the language scheduling request comprises a language pack identifier;
when (S102) it is determined that there is not a language pack corresponding to the language pack identifier in a memory of the device, determining whether a number of language packs in the memory is greater than or equal to a set value, in response to determining the number of language packs in the memory is greater than or equal to the set value, deleting a language pack requested a minimum number of times in the memory, and loading the language pack corresponding to the language pack identifier from an external storage medium into the memory of the device;
obtaining (S103) the language pack corresponding to the language pack identifier from the memory of the device and returning the language pack to the terminal so that the terminal displays a Web management page of the device based on the language pack; and
increasing a number of times that the language pack is requested by 1.

2. The method according to claim 1, further comprising:
when it is determined that there is the language pack corresponding to the language pack identifier in the memory of the device, obtaining the language pack corresponding to the language pack identifier from the memory of the device and returning the language pack to the terminal.

3. The method according to claim 1, wherein deleting the language pack requested the minimum number of times in the memory comprises:
deleting a language pack that is loaded into the memory earliest and requested the minimum number of times in the memory in response to that a number of language packs requested the minimum number of times is greater than 1.

4. The method according to claim 1, wherein when the embedded system is started, the method further comprises:
loading a default language pack from the external storage medium into the memory of the device.

5. The method according to claim 4, wherein
the default language pack is set based on an official language of a country whose geographical position corresponds to an IP address of the device,
or,
the default language pack is a language pack requested a maximum number of times during a last running process of the device.

6. A multi-language scheduling apparatus, the apparatus being applied to an embedded device, and comprising:
a receiving module (11), configured to receive a language scheduling request from a terminal, wherein the language scheduling request comprises a language pack identifier;
a processing module (12), configured to when it is determined that there is not the language pack corresponding to the language pack identifier in a memory of the device, determine whether a number of language packs in the memory is greater than or equal to a set value, in response to determining the number of language packs in the memory is greater than or equal to the set value, delete a language pack requested a minimum number of times in the memory, and load a language pack corresponding to the language pack identifier from an external storage medium into the memory of the device;
a sending module (13), configured to obtain the language pack corresponding to the language pack identifier from the memory of the device and return the language pack to the terminal so that the terminal displays a Web management page of the device based on the language pack; and
a counting module (14), configured to increase a number of times that the language pack is requested by 1.

7. The apparatus according to claim 6, wherein the processing module (12) is further configured to:
when it is determined that there is the language pack corresponding to the language pack identifier in the memory of the device, obtain the language pack corresponding to the language pack identifier from the memory of the device and return the language pack to the terminal.

8. The apparatus according to claim 6, wherein the processing module (12) is configured to:
delete a language pack that is loaded into the memory earliest and requested the minimum number of times in the memory in response to that a number of language packs requested the minimum number of times is greater than 1.

9. The apparatus according to claim 6, further comprising an initializing module (15), wherein
when the embedded system is started, the initializing module (15) is configured to load a default language pack from the external storage medium into the memory of the device.

10. The apparatus according to claim 9, wherein
the default language pack is set based on an official language of a country whose geographical position corresponds to an IP address of the device,
or,
the default language pack is a language pack requested a maximum number of times during a last running process of the device.

11. An embedded device, comprising a memory, an external storage medium, a processor and a computer program that is stored on the external storage medium and operable on the processor, wherein
the memory is configured to store one or more language packs loaded into the memory;
the external storage medium is configured to store language packs corresponding to languages supported by a Web management page of the device; and
the processor is configured to, when executing the program, perform steps of the method according to any one of claims 1-5.

## Patentansprüche

1. Mehrsprachenplanungsverfahren, wobei das Verfahren auf eine eingebettete Vorrichtung angewendet wird und Folgendes umfasst:
Empfangen (S101) einer Sprachplanungsanfrage von einem Endgerät, wobei die Sprachplanungsanfrage eine Sprachpaketkennung umfasst;
wenn (S102) bestimmt wird, dass es kein Sprachpaket, das der Sprachpaketkennung entspricht, in einem Speicher der Vorrichtung gibt, Bestimmen, ob eine Anzahl von Sprachpaketen in dem Speicher größer als oder gleich einem eingestellten Wert ist, als Reaktion auf das Bestimmen, dass die Anzahl von Sprachpaketen in dem Speicher größer als oder gleich dem eingestellten Wert ist, Löschen eines Sprachpakets, das eine Mindestanzahl von Malen in dem Speicher angefragt wurde, und Laden des Sprachpakets, das der Sprachpaketkennung entspricht, von einem externen Speichermedium in den Speicher der Vorrichtung;
Erhalten (S103) des Sprachpakets, das der Sprachpaketkennung entspricht, aus dem Speicher der Vorrichtung und Zurückgeben des Sprachpakets an das Endgerät, so dass das Endgerät eine Webverwaltungsseite der Vorrichtung basierend auf dem Sprachpaket anzeigt; und
Erhöhen einer Anzahl von Malen, die das Sprachpaket angefragt wird, um 1.

2. Verfahren nach Anspruch 1, das ferner Folgendes umfasst:
wenn bestimmt wird, dass es das Sprachpaket, das der Sprachpaketkennung entspricht, in dem Speicher der Vorrichtung gibt, Erhalten des Sprachpakets, das der Sprachpaketkennung entspricht, aus dem Speicher der Vorrichtung und Zurückgeben des Sprachpakets an das Endgerät.

3. Verfahren nach Anspruch 1, wobei das Löschen des Sprachpakets, das die Mindestanzahl von Malen in dem Speicher angefragt wurde, Folgendes umfasst: Löschen eines Sprachpakets, das frühestens in den Speicher geladen wurde und die Mindestanzahl von Malen in dem Speicher angefragt wurde, als Reaktion darauf, dass eine Anzahl von Sprachpaketen, die die Mindestanzahl von Malen angefragt wurde, größer als 1 ist.

4. Verfahren nach Anspruch 1, wobei, wenn das eingebettete System gestartet wird, das Verfahren ferner Folgendes umfasst:
Laden eines Standardsprachpakets von dem externen Speichermedium in den Speicher der Vorrichtung.

5. Verfahren nach Anspruch 4, wobei
das Standardsprachpaket basierend auf einer Amtssprache eines Landes eingestellt wird, dessen geografische Position einer IP-Adresse der Vorrichtung entspricht, oder,
das Standardsprachpaket ein Sprachpaket ist, das eine maximale Anzahl von Malen während eines letzten laufenden Prozesses der Vorrichtung angefragt wurde.

6. Mehrsprachenplanungsvorrichtung, wobei die Vorrichtung auf eine eingebettete Vorrichtung angewendet wird und Folgendes umfasst:
ein Empfangsmodul (11), das eingerichtet ist, eine Sprachplanungsanfrage von einem Endgerät zu empfangen, wobei die Sprachplanungsanfrage eine Sprachpaketkennung umfasst;
ein Verarbeitungsmodul (12), das eingerichtet ist, wenn bestimmt wird, dass es kein Sprachpaket, das der Sprachpaketkennung entspricht, in einem Speicher der Vorrichtung gibt, zu bestimmen, ob eine Anzahl von Sprachpaketen in dem Speicher größer als oder gleich einem eingestellten Wert ist, als Reaktion auf das Bestimmen,
dass die Anzahl von Sprachpaketen in dem Speicher größer als oder gleich dem eingestellten Wert ist, ein Sprachpaket, das eine Mindestanzahl von Malen in dem Speicher angefragt wurde, zu löschen und ein Sprachpaket, das der Sprachpaketkennung entspricht, von einem externen Speichermedium in den Speicher der Vorrichtung zu laden;
ein Sendemodul (13), das eingerichtet ist, das Sprachpaket, das der Sprachpaketkennung entspricht, aus dem Speicher der Vorrichtung zu erhalten und das Sprachpaket an das Endgerät zurückzugeben, so dass das Endgerät eine Webverwaltungsseite der Vorrichtung basierend auf dem Sprachpaket anzeigt; und
ein Zählmodul (14), das eingerichtet ist, eine Anzahl von Malen, die das Sprachpaket angefragt wird, um 1 zu erhöhen.

7. Vorrichtung nach Anspruch 6, wobei das Verarbeitungsmodul (12) ferner eingerichtet ist zum:
wenn bestimmt wird, dass es das Sprachpaket, das der Sprachpaketkennung entspricht,
in dem Speicher der Vorrichtung gibt, Erhalten des Sprachpakets, das der Sprachpaketkennung entspricht, aus dem Speicher der Vorrichtung und Zurückgeben des Sprachpakets an das Endgerät.

8. Vorrichtung nach Anspruch 6, wobei das Verarbeitungsmodul (12) eingerichtet ist zum:
Löschen eines Sprachpakets, das frühestens in den Speicher geladen wurde und die Mindestanzahl von Malen in dem Speicher angefragt wurde, als Reaktion darauf, dass eine Anzahl von Sprachpaketen, die die Mindestanzahl von Malen angefragt wurde, größer als 1 ist.

9. Vorrichtung nach Anspruch 6, die ferner ein Initialisierungsmodul (15) umfasst, wobei wenn das eingebettete System gestartet wird, das Initialisierungsmodul (15) eingerichtet ist, ein Standardsprachpaket von dem externen Speichermedium in den Speicher der Vorrichtung zu laden.

10. Vorrichtung nach Anspruch 9, wobei
das Standardsprachpaket basierend auf einer Amtssprache eines Landes eingestellt wird, dessen geografische Position einer IP-Adresse der Vorrichtung entspricht, oder,
das Standardsprachpaket ein Sprachpaket ist, das eine maximale Anzahl von Malen während eines letzten laufenden Prozesses der Vorrichtung angefragt wurde.

11. Eingebettete Vorrichtung, umfassend einen Speicher, ein externes Speichermedium, einen Prozessor und ein Computerprogramm, das auf dem externen Speichermedium gespeichert ist und auf dem Prozessor ausführbar ist, wobei
der Speicher eingerichtet ist, ein oder mehrere Sprachpakete zu speichern, die in den Speicher geladen sind;
das externe Speichermedium eingerichtet ist, Sprachpakete zu speichern, die Sprachen entsprechen, die durch eine Webverwaltungsseite der Vorrichtung unterstützt werden; und
der Prozessor eingerichtet ist, wenn er das Programm ausführt, Schritte des Verfahrens nach einem der Ansprüche 1-5 durchzuführen.

## Revendications

1. Procédé de programmation de multiples langues, le procédé étant appliqué à un dispositif intégré, et comprenant :
la réception (S101) d'une demande de programmation de langue en provenance d'un terminal, dans lequel la demande de programmation de langue comprend un identifiant de paquet de langue ;
lorsqu'il est déterminé (S102) qu'il n'y a pas de paquet de langue correspondant à l'identifiant de paquet de langue dans une mémoire du dispositif, la détermination si un nombre de paquets de langue dans la mémoire est supérieur ou égal à une valeur définie, en réponse à la détermination que le nombre de paquets de langue dans la mémoire est supérieur ou égal à la valeur définie, la suppression d'un paquet de langue demandé un nombre minimum de fois dans la mémoire, et le chargement du paquet de langue correspondant à l'identifiant de paquet de langue depuis un support de stockage externe dans la mémoire du dispositif ;
l'obtention (S103) du paquet de langue correspondant à l'identifiant de paquet de langue à partir de la mémoire du dispositif et le renvoi du paquet de langue au terminal de sorte que le terminal affiche une page de gestion Web du dispositif sur la base du paquet de langue ; et
l'augmentation d'un nombre de fois où le paquet de langue est demandé de 1.

2. Procédé selon la revendication 1, comprenant en outre :
lorsqu'il est déterminé qu'il y a le paquet de langue correspondant à l'identifiant de paquet de langue dans la mémoire du dispositif, l'obtention du paquet de langue correspondant à l'identifiant de paquet de langue à partir de la mémoire du dispositif et le renvoi du paquet de langue au terminal.

3. Procédé selon la revendication 1, dans lequel la suppression du paquet de langue demandé le nombre minimum de fois dans la mémoire comprend :
la suppression d'un paquet de langue qui est chargé dans la mémoire le plus tôt et demandé le nombre minimum de fois dans la mémoire en réponse au fait qu'un nombre de paquets de langue demandés le nombre minimum de fois est supérieur à 1.

4. Procédé selon la revendication 1, dans lequel lorsque le système intégré est démarré, le procédé comprend en outre :
le chargement d'un paquet de langue par défaut depuis le support de stockage externe dans la mémoire du dispositif.

5. Procédé selon la revendication 4, dans lequel
le paquet de langue par défaut est défini sur la base d'une langue officielle d'un pays dont la position géographique correspond à une adresse IP du dispositif,
ou,
le paquet de langue par défaut est un paquet de langue demandé un nombre maximum de fois pendant un dernier processus d'exécution du dispositif.

6. Appareil de programmation de multiples langues, l'appareil étant appliqué à un dispositif intégré, et comprenant :
un module de réception (11), configuré pour recevoir une demande de programmation de langue en provenance d'un terminal, dans lequel la demande de programmation de langue comprend un identifiant de paquet de langue ;
un module de traitement (12), configuré pour, lorsqu'il est déterminé qu'il n'y a pas le paquet de langue correspondant à l'identifiant de paquet de langue dans une mémoire du dispositif, déterminer si un nombre de paquets de langue dans la mémoire est supérieur ou égal à une valeur définie, en réponse à la détermination que le nombre de paquets de langue dans la mémoire est supérieur ou égal à la valeur définie, supprimer un paquet de langue demandé un nombre minimum de fois dans la mémoire, et charger un paquet de langue correspondant à l'identifiant de paquet de langue depuis un support de stockage externe dans la mémoire du dispositif ;
un module d'envoi (13), configuré pour obtenir le paquet de langue correspondant à l'identifiant de paquet de langue à partir de la mémoire du dispositif et renvoyer le paquet de langue au terminal de sorte que le terminal affiche une page de gestion Web du dispositif sur la base du paquet de langue ; et
un module de comptage (14), configuré pour augmenter un nombre de fois où le paquet de langue est demandé de 1.

7. Appareil selon la revendication 6, dans lequel le module de traitement (12) est en outre configuré pour :
lorsqu'il est déterminé qu'il y a le paquet de langue correspondant à l'identifiant de paquet de langue dans la mémoire du dispositif, obtenir le paquet de langue correspondant à l'identifiant de paquet de langue à partir de la mémoire du dispositif et renvoyer le paquet de langue au terminal.

8. Appareil selon la revendication 6, dans lequel le module de traitement (12) est configuré pour :
supprimer un paquet de langue qui est chargé dans la mémoire le plus tôt et demandé le nombre minimum de fois dans la mémoire en réponse au fait qu'un nombre de paquets de langue demandés le nombre minimum de fois est supérieur à 1.

9. Appareil selon la revendication 6, comprenant en outre un module d'initialisation (15), dans lequel
lorsque le système intégré est démarré, le module d'initialisation (15) est configuré pour charger un paquet de langue par défaut depuis le support de stockage externe dans la mémoire du dispositif.

10. Appareil selon la revendication 9, dans lequel
le paquet de langue par défaut est défini sur la base d'une langue officielle d'un pays dont la position géographique correspond à une adresse IP du dispositif,
ou,
le paquet de langue par défaut est un paquet de langue demandé un nombre maximum de fois pendant un dernier processus d'exécution du dispositif.

11. Dispositif intégré, comprenant une mémoire, un support de stockage externe, un processeur et un programme informatique qui est stocké sur le support de stockage externe et utilisable sur le processeur, dans lequel
la mémoire est configurée pour stocker un ou plusieurs paquets de langue chargés dans la mémoire ;
le support de stockage externe est configuré pour stocker des paquets de langue correspondant à des langues prises en charge par une page de gestion Web du dispositif ; et
le processeur est configuré pour, lors de l'exécution du programme, effectuer des étapes du procédé selon l'une quelconque des revendications 1 à 5.
